# EUROPEAN PATENT APPLICATION

(11) **EP 4 841 557 A1**
(43) Date of publication of application: **18.11.2026**
(21) Application number: 25867677.4
(22) Date of filing: 06.08.2025
(51) Int. Cl.: G06T 7/00

(54) **METHOD AND APPARATUS FOR DETERMINING INTERSECTION OVER UNION THRESHOLD VALUE OF MAGNETIC FLUX LEAKAGE INTERNAL INSPECTION OF PIPELINE**

(30) Priority: 23.09.2024 CN 202411323783
(71) Applicant: China Oil & Gas Pipeline Network Corporation, Beijing 100013 (CN); Pipechina Institute of Science and Technology, Tianjin 300450 (CN)
(72) Inventor: XUAN, Wenbo, Tianjin 300450 (CN); CHEN, Pengchao, Tianjin 300450 (CN); LI, Rui, Tianjin 300450 (CN); FU, Kuan, Tianjin 300450 (CN); WANG, Fuxiang, Tianjin 300450 (CN); ZHONG, Ting, Tianjin 300450 (CN); YANG, Guangyong, Tianjin 300450 (CN); WANG, Yanan, Tianjin 300450 (CN); DUAN, Jinyao, Tianjin 300450 (CN); ZHANG, Yinhui, Tianjin 300450 (CN); YANG, Hui, Tianjin 300450 (CN); LEI, Zhengqiang, Tianjin 300450 (CN); QIU, Honghui, Tianjin 300450 (CN)
(74) Representative: Cabinet Camus Lebkiri
(86) International application number: PCT/CN2025/113016
(87) International publication number: WO 2026/061156

(57) **Abstract**

Provided in the present disclosure are a method and apparatus for determining an intersection over union threshold value of magnetic flux leakage internal inspection of a pipeline. The method comprises: acquiring magnetic flux leakage internal inspection data, the magnetic flux leakage internal inspection data being magnetic flux leakage amplitudes of a plurality of sampling points of a target pipeline acquired by means of a plurality of sensors; performing defect annotation on the magnetic flux leakage internal inspection data so as to obtain defect data corresponding to each of a plurality of defect regions of the target pipeline, the defect data being the magnetic flux leakage amplitudes acquired by a plurality of sensors respectively with respect to a plurality of sampling points comprised in the defect region; on the basis of the defect data corresponding to each of the plurality of defect regions, determining an average magnetization level value corresponding to the magnetic flux leakage internal inspection data; and, on the basis of the average magnetization level value corresponding to the magnetic flux leakage internal inspection data, determining an intersection over union threshold value of pipeline magnetic flux leakage internal inspection.

## Description

This application claims priority to Chinese Patent Application No. 202411323783.7, filed on September 23, 2024, which is incorporated herein by reference in its entirety.

### TECHNICAL FIELD

The present disclosure relates to the field of image detection technologies, and in particular, to a method and apparatus for determining an intersection over union threshold for pipeline magnetic flux leakage internal inspection.

### BACKGROUND

In recent years, with rapid economic development, the consumption of oil and natural gas has been increasing continuously. However, during the transportation of oil and natural gas through pipelines, the pipelines may face threats from material corrosion and external force factors, resulting in a continuous rise in safety risks. Once a pipeline is damaged and oil or gas leakage occurs, it will not only cause serious energy waste, but also cause serious environmental pollution. Therefore, it is crucial to perform regular inspections of pipelines, to ensure safe operation of the pipelines. In pipeline inspection, defect identification is a crucial step, which enables effective detection of potential damaged parts. Designing accurate defect identification algorithms is of great significance for inspection in practical engineering.

### SUMMARY

In a first aspect, a method for determining an intersection over union threshold for pipeline magnetic flux leakage internal inspection is provided. The method includes: acquiring magnetic flux leakage internal inspection data, the magnetic flux leakage internal inspection data including magnetic flux leakage amplitudes acquired by a plurality of sensors at a plurality of sampling points of a target pipeline; performing defect annotation on the magnetic flux leakage internal inspection data, to obtain a set of defect data corresponding to each of a plurality of defect regions of the target pipeline, the set of defect data including magnetic flux leakage amplitudes acquired by the plurality of sensors at a plurality of sampling points included in the defect region; determining, based on the set of defect data corresponding to each of the plurality of defect regions, an average magnetization level value corresponding to the magnetic flux leakage internal inspection data; and determining, based on the average magnetization level value corresponding to the magnetic flux leakage internal inspection data, an intersection over union threshold for pipeline magnetic flux leakage internal inspection.

In an implementation of the first aspect, the determining, based on the set of defect data corresponding to each of the plurality of defect regions, the average magnetization level value corresponding to the magnetic flux leakage internal inspection data, includes: determining, based on the set of defect data corresponding to each of the plurality of defect regions, a magnetization level value corresponding to each defect region; and determining, based on the magnetization level value corresponding to each defect region, the average magnetization level value corresponding to the magnetic flux leakage internal inspection data.

A formula for determining the magnetization level value *GS* corresponding to each defect region is: $GS = \frac{1}{m \times n} {\sum }_{i = 1}^{n} mid \left({x}_{i}\right) .$

Herein, *m* denotes the number of sampling points included in each defect region, *n* denotes the number of corresponding sensors acquiring each set of defect data, *mid*(*xᵢ*) denotes a median of magnetic flux leakage amplitudes acquired by an i-th sensor at *m* sampling points, and i is less than or equal to *n*.

A formula for determining the average magnetization level value*GS_{average}* corresponding to the magnetic flux leakage internal inspection data is: ${GS}_{average} = \frac{1}{{B}_{N}} {\sum }_{i = 1}^{{B}_{N}} {GS}_{i} .$

Herein, B_{N} denotes a preset batch number, and GSᵢ denotes a magnetization level value corresponding to an i-th defect region.

In an implementation of the first aspect, the determining, based on the average magnetization level value corresponding to the magnetic flux leakage internal inspection data, the intersection over union threshold for pipeline magnetic flux leakage internal inspection, includes: determining, in response to the average magnetization level value corresponding to the magnetic flux leakage internal inspection data being greater than or equal to a first preset threshold, the intersection over union threshold for pipeline magnetic flux leakage internal inspection to be 0.75; determining, in response to the average magnetization level value corresponding to the magnetic flux leakage internal inspection data being less than a second preset threshold, the intersection over union threshold for pipeline magnetic flux leakage internal inspection to be 0.5; and determining, in response to the average magnetization level value corresponding to the magnetic flux leakage internal inspection data being less than the first preset threshold and greater than or equal to the second preset threshold, the intersection over union threshold *IoU* for pipeline magnetic flux leakage internal inspection based on the following formulas: $IoU = 0.1 \times ln \left(\frac{{B}_{N}}{3}\times {GS}_{average}-{B}_{N}\times \left({F}_{max}-{F}_{min}\right)\right) + {P}_{r} ;$ ${P}_{r} = \frac{{N}_{f}}{{N}_{all}} .$

Herein, Fₘₐₓ denotes the first preset threshold, Fₘᵢₙ denotes the second preset threshold, Pᵣ denotes a proportion of unqualified data in sets of defect data, N_{f} denotes the number of unqualified data in the sets of defect data, Nₐₗₗ denotes a total number of the sets of defect data, and the unqualified data refers to a set of defect data with a peak signal-to-noise ratio less than a preset peak signal-to-noise ratio.

In an implementation of the first aspect, before the intersection over union threshold for pipeline magnetic flux leakage internal inspection is determined based on the average magnetization level value corresponding to the magnetic flux leakage internal inspection data, the method further includes: determining a peak signal-to-noise ratio corresponding to each set of defect data; and determining, based on the peak signal-to-noise ratio corresponding to each set of defect data, the number of unqualified data in sets of defect data.

Formulas for determining a peak signal-to-noise ratio *PSNRᵢ* of an i-th set of defect data are: ${PSNR}_{i} = 10 \times \left(\frac{{\left({x}_{max}-\overline{x}\right)}^{2}}{MSE}\right) ;$ $MSE = \frac{1}{n} {{\sum }_{i = 1}^{n} \left({x}_{i}-\overline{x}\right)}^{2} .$

Herein, xᵢ denotes a magnetic flux leakage amplitude corresponding to an i-th sampling point acquired by a target sensor acquiring the i-th set of defect data; xₘₐₓ denotes a maximum value among magnetic flux leakage amplitudes corresponding to n sampling points acquired by the target sensor for the i-th set of defect data, and x̅ denotes an average value among the magnetic flux leakage amplitudes corresponding to the n sampling points acquired by the target sensor for the i-th set of defect data. A peak-to-valley difference of the target sensor acquiring the i-th set of defect data is a maximum value among peak-to-valley differences of the plurality of sensors acquiring the i-th set of defect data, and the peak-to-valley difference is a difference between maximum and minimum values among magnetic flux leakage amplitudes corresponding to the n sampling points.

In an implementation of the first aspect, the method further includes: determining feature parameters corresponding to the magnetic flux leakage internal inspection data, the feature parameters including an average peak-to-valley difference, an average surface energy, and an average volume energy; determining, based on the feature parameters corresponding to the magnetic flux leakage internal inspection data, an image compression coefficient corresponding to the magnetic flux leakage internal inspection data; and processing, based on the image compression coefficient corresponding to the magnetic flux leakage internal inspection data, the magnetic flux leakage internal inspection data, to obtain a color magnetic flux leakage internal inspection image.

In an implementation of the first aspect, the determining the feature parameters corresponding to the magnetic flux leakage internal inspection data, includes: determining a peak-to-valley difference, surface energy, and volume energy corresponding to each set of defect data included in the magnetic flux leakage internal inspection data; and determining a ratio of an average value of peak-to-valley differences each corresponding to each set of defect data to a maximum value among the peak-to-valley differences each corresponding to each set of defect data as the average peak-to-valley difference, a ratio of an average value of surface energies each corresponding to each set of defect data to a maximum value of the surface energies each corresponding to each set of defect data as the average surface energy, and a ratio of an average value of volume energies each corresponding to each set of defect data to a maximum value of the volume energies each corresponding to each set of defect data as the average volume energy.

In an implementation of the first aspect, a formula for determining the image compression coefficient CR corresponding to the magnetic flux leakage internal inspection data is: $CR = {A}_{fg}^{′} \times {K}_{fg} + {A}_{s}^{′} \times {K}_{s} + {A}_{v}^{′} \times {K}_{v} .$

Herein, ${A}_{fg }^{′}$ denotes the average peak-to-valley difference, K_{fg} denotes a weight coefficient of the peak-to-valley difference, ${A}_{s }^{′}$ denotes the average surface energy, Kₛ denotes a weight coefficient of the surface energy, ${A}_{v }^{′}$ denotes the average volume energy, and Kᵥ denotes a weight coefficient of the volume energy.

In an implementation of the first aspect, the processing, based on the image compression coefficient corresponding to the magnetic flux leakage internal inspection data, the magnetic flux leakage internal inspection data, to obtain the color magnetic flux leakage internal inspection image, includes: converting, based on a grayscale mapping method, the magnetic flux leakage internal inspection data into a grayscale image; and processing the grayscale image based on the image compression coefficient corresponding to the magnetic flux leakage internal inspection data, to obtain the color magnetic flux leakage internal inspection image.

In a second aspect, an apparatus for determining an intersection over union threshold for pipeline magnetic flux leakage internal inspection is provided in the embodiments of the present disclosure. The apparatus includes: a data acquisition unit configured to acquire magnetic flux leakage internal inspection data, the magnetic flux leakage internal inspection data including magnetic flux leakage amplitudes acquired by a plurality of sensors at a plurality of sampling points of a target pipeline; a defect annotation unit configured to perform defect annotation on the magnetic flux leakage internal inspection data, to obtain a set of defect data corresponding to each of a plurality of defect regions of the target pipeline, the set of defect data including magnetic flux leakage amplitudes acquired by the plurality of sensors at a plurality of sampling points included in the defect region; a magnetization determination unit configured to determine, based on the set of defect data corresponding to each of the plurality of defect regions, an average magnetization level value corresponding to the magnetic flux leakage internal inspection data; and a threshold determination unit configured to determine, based on the average magnetization level value corresponding to the magnetic flux leakage internal inspection data, an intersection over union threshold for pipeline magnetic flux leakage internal inspection.

In a third aspect, an electronic device is provided. The electronic device includes a memory and one or more processors. The memory is coupled to the processor. The memory stores computer program code including computer instructions. The computer instructions, upon being executed by the processor, enable the electronic device to perform the method according to any implementation of the first aspect.

In a fourth aspect, a computer-readable storage medium including computer instructions is provided. The computer instructions, upon being run on an electronic device, enable the electronic device to perform the method according to any implementation of the first aspect.

In a fifth aspect, a computer program product is provided. The computer program product, upon being run on a computer, enables the computer to perform the method according to any implementation of the first aspect.

In a sixth aspect, a computer program is provided. The computer program, upon being run on a computer, enables the computer to perform the method according to any implementation of the first aspect.

### BRIEF DESCRIPTION OF THE DRAWINGS

FIG. 1 is a schematic diagram showing a hardware structure of an electronic device, in accordance with embodiments of the present disclosure;
FIG. 2 is a flow chart of a method for determining an intersection over union threshold for pipeline magnetic flux leakage internal inspection, in accordance with embodiments of the present disclosure;
FIG. 3 is another flow chart of a method for determining an intersection over union threshold for pipeline magnetic flux leakage internal inspection, in accordance with embodiments of the present disclosure;
FIG. 4 is yet another flow chart of a method for determining an intersection over union threshold for pipeline magnetic flux leakage internal inspection, in accordance with embodiments of the present disclosure; and
FIG. 5 is a schematic diagram showing a hardware structure of a determination apparatus, in accordance with embodiments of the present disclosure.

### DETAILED DESCRIPTION

The technical solutions in the embodiments of the present disclosure are described below with reference to the accompanying drawings in the embodiments of the present disclosure. In the description of the present disclosure, unless otherwise specified, the symbol "/" means that the associated objects before and after it are in an "or" relationship. For example, "A/B" may mean A or B. Herein, "and/or" is merely an associated relationship for describing associated objects, which means that there may be three relationships, for example, "A and/or B" may mean: only A, A and B, and only B. A and B may be singular or plural. In the description of the present disclosure, unless otherwise specified, the term such as "a/the plurality of" means two or more. The expression "at least one of the following" or similar expressions refer to any combination of these items, including any combination of a single item or a plurality of items.

In addition, for the convenience of clearly describing the technical solutions in the embodiments of the present disclosure, the terms such as "first" and "second" are used in the embodiments of the present disclosure to distinguish the same or similar items that have essentially the same functions and effects. Those skilled in the art may understand that the terms such as "first" and "second" do not limit the quantity or execution order, and the terms such as "first" and "second"" do not necessarily indicate that the items are different.

Meanwhile, in the embodiments of the present disclosure, the terms such as "exemplary" or "for example" are used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in some manners to facilitate understanding. Where there is no conflict, the functions, steps, etc. shown in the present disclosure may occur in an order different from that shown in the present disclosure, and there may be other functions, steps, etc. between two adjacent functions, steps, etc. shown in the present disclosure.

In recent years, with rapid economic development, the consumption of oil and natural gas has been increasing continuously. However, during the transportation of oil and natural gas through pipelines, the pipelines may face threats from material corrosion and external force factors, resulting in a continuous rise in safety risks. Once a pipeline is damaged and oil or gas leakage occurs, it will not only cause serious energy waste, but also cause serious environmental pollution. Therefore, it is crucial to perform regular inspections of pipelines, to ensure safe operation of the pipelines. In pipeline inspection, defect identification is a crucial step, which enables effective detection of potential damaged parts. Designing accurate defect identification algorithms is of great significance for inspection in practical engineering.

Pipeline magnetic flux leakage internal inspection is currently a widely used nondestructive testing technology for pipelines. Compared with other technologies, it has higher stability, detection efficiency and accuracy, and performs well in complex environments. In recent years, magnetic flux leakage internal inspection has usually been combined with machine learning algorithms, to achieve the identification and localization of pipeline defects. Intersection over union loss plays an important role in the training of defect detection models, and the setting of an intersection over union threshold has a significant impact on the detection accuracy and generalization capability of the final detection model. In a case where the intersection over union threshold is set in the form of a global threshold, since the images obtained from magnetic flux leakage internal inspection have inherent noise and uncertainty, this will affect the setting of the intersection over union threshold, thereby affecting the detection accuracy and localization capability of the detection model.

Therefore, there is an urgent need for a method and apparatus for determining an intersection over union threshold for pipeline magnetic flux leakage internal inspection, so as to quickly and accurately determine the intersection over union thresholds corresponding to different pipeline magnetic flux leakage internal inspection data, thereby improving the detection accuracy and localization capability of the detection model.

In view of this, a method for determining an intersection over union threshold for pipeline magnetic flux leakage internal inspection is provided in the embodiments of the present disclosure. The method includes: acquiring magnetic flux leakage internal inspection data, the magnetic flux leakage internal inspection data including magnetic flux leakage amplitudes acquired by a plurality of sensors at a plurality of sampling points of a target pipeline; performing defect annotation on the magnetic flux leakage internal inspection data, to obtain a set of defect data corresponding to each of a plurality of defect regions of the target pipeline, the set of defect data including magnetic flux leakage amplitudes acquired by the plurality of sensors at a plurality of sampling points included in the defect region; determining, based on the set of defect data corresponding to each of the plurality of defect regions, an average magnetization level value corresponding to the magnetic flux leakage internal inspection data; and determining, based on the average magnetization level value corresponding to the magnetic flux leakage internal inspection data, an intersection over union threshold for pipeline magnetic flux leakage internal inspection.

In the method provided in the embodiments of the present disclosure, magnetic flux leakage internal inspection data are acquired, then defect annotation is performed on the magnetic flux leakage internal inspection data, so that a set of defect data corresponding to each of a plurality of defect regions of a target pipeline is obtained; an average magnetization level value corresponding to the magnetic flux leakage internal inspection data is determined based on the set of defect data corresponding to each of the plurality of defect regions; and an intersection over union threshold for pipeline magnetic flux leakage internal inspection is determined based on the average magnetization level value corresponding to the magnetic flux leakage internal inspection data. In this way, in the embodiments of the present disclosure, the intersection over union thresholds corresponding to different pipeline magnetic flux leakage internal inspection data may be quickly and accurately determined, thereby effectively improving the detection accuracy and localization capability of the detection model in a case where the detection model is trained with different pipeline magnetic flux leakage internal inspection data.

In another aspect, the method provided in the embodiments of the present disclosure may effectively remove image redundancy and improve the quality of image data by determining an image compression coefficient corresponding to the magnetic flux leakage internal inspection data, and performing compression processing on the magnetic flux leakage internal inspection data based on the image compression coefficient corresponding to the magnetic flux leakage internal inspection data.

In some embodiments, the method for determining the intersection over union threshold for pipeline magnetic flux leakage internal inspection provided in the embodiments of the present disclosure may be executed by an apparatus 100 (hereinafter referred to as the determination apparatus 100) for determining the intersection over union threshold for pipeline magnetic flux leakage internal inspection. For example, the determination apparatus 100 may include any electronic device 200 with data processing capabilities, such as a general-purpose computer, a personal computer, a notebook computer, a switch, or a tablet computer. The implementation of the determination apparatus 100 is not limited herein.

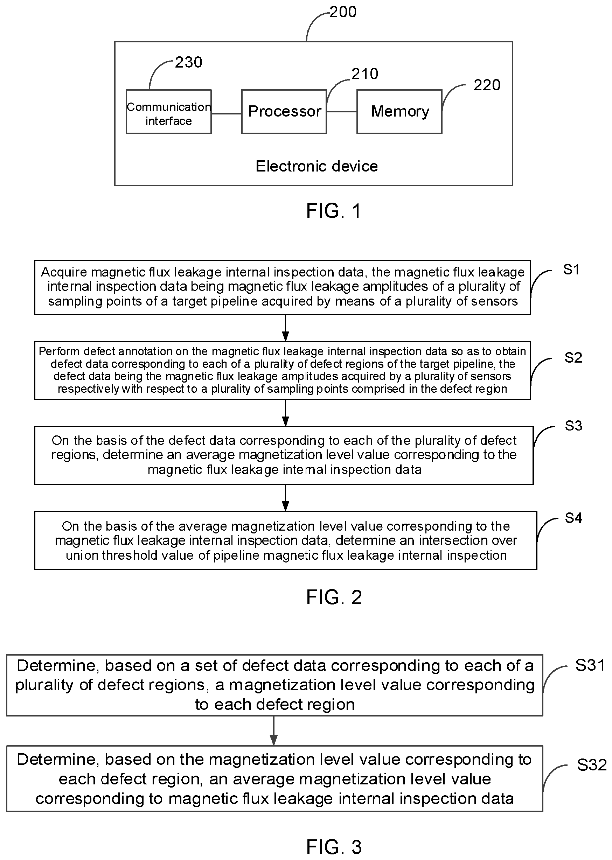

FIG. 1 is a schematic diagram showing a hardware structure of the electronic device provided in the embodiments of the present disclosure. The electronic device 200 includes a processor 210, a memory 220, and a communication interface 230.

The processor 210 may include one or more processing cores. The processor 210 is connected to various components in the electronic device 200 via various interfaces and lines. The processor 210 performs various functions of the electronic device 200 and processes data by running or executing instructions, programs, code sets or instruction sets stored in the memory 220, and invoking data stored in the memory 220. In some embodiments, the processor 210 may be implemented in at least one of the following hardware forms: a central processing unit (CPU), a graphics processing unit (GPU), a digital signal processor (DSP), a field-programmable gate array (FPGA), or a programmable logic array (PLA).

The memory 220 may include a random access memory (RAM) or a read-only memory (ROM). In some embodiments, the memory 220 includes a non-transitory computer-readable storage medium. The memory 220 may be configured to store instructions, programs, code, code sets, or instruction sets. The memory 220 may include a program storage area. The program storage area may store instructions for implementing an operating system, instructions for implementing at least one function (e.g., a data acquisition function, a data processing function), and instructions for implementing the method embodiments described above.

The communication interface 230 is configured to communicate with other devices, equipment, or communication networks, such as data storage devices, image processing devices, Ethernet, a radio access network (RAN), or a wireless local area network (WLAN).

In terms of physical implementation, the components (e.g., the processor 210, the memory 220, and the communication interface 230) described above may each be a component in the same device (e.g., a notebook computer). Alternatively, at least two of the components may be disposed in the same device. That is to say, the at least two of the components may be implemented as different components in a device, similar to the deployment of devices or components in a distributed system.

It may be understood that the structure illustrated in the embodiments does not constitute a specific limitation on the electronic device 200. In some other embodiments of the present disclosure, the electronic device 200 may include more or fewer components than those shown in the drawing, or some components may be combined or split, or the electronic device 200 has a different component arrangement. The components shown in the drawing may be implemented in hardware, software, or a combination of software and hardware.

The method for determining the intersection over union threshold for pipeline magnetic flux leakage internal inspection provided in the embodiments of the present disclosure is described below in conjunction with the accompanying drawings.

FIG. 2 is a flow chart of the method for determining the intersection over union threshold for pipeline magnetic flux leakage internal inspection provided in the embodiments of the present disclosure. In some embodiments, the method may be performed by the electronic device 200 shown in FIG. 1. That is to say, the method may be performed by the determination apparatus 100. The method may include the following S1 to S4.

In S1, magnetic flux leakage internal inspection data are acquired, and the magnetic flux leakage internal inspection data include magnetic flux leakage amplitudes acquired by a plurality of sensors at a plurality of sampling points of a target pipeline.

In some embodiments, a magnetic flux leakage internal inspection device is provided with a plurality of sensors. The magnetic flux leakage internal inspection device moves along a radial direction of the target pipeline during operation. There are a plurality of sampling points on the target pipeline. The magnetic flux leakage internal inspection data include magnetic flux leakage amplitudes acquired by each of the plurality of sensors at the plurality of sampling points.

For example, referring to Table 1, Table 1 is a data table of magnetic flux leakage internal inspection data illustrated in the embodiments of the present disclosure. The magnetic flux leakage internal inspection device is provided with five sensors, namely Sensor 1 to Sensor 5. The target pipeline includes five sampling points. The magnetic flux leakage internal inspection data include magnetic flux leakage amplitudes of Sampling Point 1 to Sampling Point 5 acquired by each of the five sensors. Each column of the table corresponds to a sensor, and each row of the table corresponds to a sampling point. X11 denotes a magnetic flux leakage amplitude of Sampling Point 1 acquired by Sensor 1.

**Table 1**

| | Sensor 1 | Sensor 2 | Sensor 3 | Sensor 4 | Sensor 5 |
|---|---|---|---|---|---|
| Sampling Point 1 | X11 | X12 | X13 | X14 | X15 |
| Sampling Point 2 | X21 | X22 | X23 | X24 | X25 |
| Sampling Point 3 | X31 | X32 | X33 | X34 | X35 |
| Sampling Point 4 | X41 | X42 | X43 | X44 | X45 |
| Sampling Point 5 | X51 | X52 | X53 | X54 | X55 |

It will be understood that in different application scenarios, the number of sensors disposed in the magnetic flux leakage internal inspection device and the number of sampling points may be greater than those in the example described above. For example, the number of sampling points is usually tens of thousands or hundreds of thousands. The number of sampling points in the embodiments of the present disclosure may be of any order of magnitude. The example described above is merely provided for the convenience of description. Therefore, the number of sensors and the number of sampling points are both exemplified as five.

In S2, defect annotation is performed on the magnetic flux leakage internal inspection data, to obtain a set of defect data corresponding to each of a plurality of defect regions of the target pipeline, and the set of defect data includes magnetic flux leakage amplitudes acquired by the plurality of sensors at a plurality of sampling points included in the defect region.

In some embodiments, in a case where there are a plurality of defect regions on the target pipeline, when the magnetic flux leakage internal inspection device passes through a defect region, the magnetic flux leakage amplitudes corresponding to a plurality of sampling points included in the defect region acquired by the plurality of sensors are a set of defect data.

Referring to Table 1 and Table 2, Table 2 is a data table of one set of defect data included in the magnetic flux leakage internal inspection data. Table 2 includes the magnetic flux leakage amplitudes corresponding to Sampling Points 2 to 4 obtained by Sensors 1 to 3 in the magnetic flux leakage internal inspection data.

**Table 2**

| | Sensor 1 | Sensor 2 | Sensor 3 |
|---|---|---|---|
| Sampling Point 2 | 40 | 50 | 70 |
| Sampling Point 3 | 50 | 55 | 40 |
| Sampling Point 4 | 60 | 60 | 70 |

It will be understood that the example of the set of defect data is merely for description, and the embodiments of the present disclosure do not impose any particular limitation on the number of magnetic flux leakage amplitudes included in a set of defect data. For example, a set of defect data may include magnetic flux leakage amplitudes corresponding to 500 sampling points included in a defect region acquired by 50 sensors.

In S3, an average magnetization level value corresponding to the magnetic flux leakage internal inspection data is determined based on the set of defect data corresponding to each of the plurality of defect regions.

In an implementation, referring to FIG. 3, S3 may include the following S31 and S32.

In S31, a magnetization level value corresponding to each defect region is determined based on the set of defect data corresponding to each of the plurality of defect regions.

In some embodiments, a formula for determining the magnetization level value *GS* corresponding to each defect region is: $GS = \frac{1}{m \times n} {\sum }_{i = 1}^{n} mid \left({x}_{i}\right) .$

Herein, *m* denotes the number of sampling points included in each defect region, *n* denotes the number of corresponding sensors acquiring each set of defect data, *mid*(*xᵢ)* denotes the median of the magnetic flux leakage amplitudes acquired by the i-th sensor at the *m* sampling points, and i is less than or equal to *n*.

For example, with reference to Table 2, first, the number m of sampling points included in the set of defect data is determined to be 3, and the number n of corresponding sensors acquiring each set of defect data is determined to be 3. Then, the median of X21, X31 and X41, the median of X22, X32 and X42, and the median of X23, X33 and X43 are separately determined. Next, the magnetization level value *GS* corresponding to the defect region is obtained based on the formula described above.

It will be understood that the magnetic flux leakage internal inspection data include a plurality of sets of defect data, and the magnetization level value*GS* corresponding to each set of defect data is determined in the same manner as that in the example described above, and details will not be repeated herein.

In some embodiments, weights may be assigned based on the reliability of the sensors. A formula for determining the magnetization level value *GS* corresponding to each defect region is: $GS = \frac{1}{m \times n} {\sum }_{i = 1}^{n} {ω}_{i} ⋅ mid \left({x}_{i}\right) .$

Herein, ωᵢ may be dynamically adjusted based on a historical error rate of the sensor. The larger the error, the smaller the weight. For example, in a case where the error rate is less than 5%, ωᵢ is equal to 1.2.

In S32, the average magnetization level value corresponding to the magnetic flux leakage internal inspection data is determined based on the magnetization level value corresponding to each defect region.

In some embodiments, a formula for determining the average magnetization level value *GS_{average}* corresponding to the magnetic flux leakage internal inspection data is: ${GS}_{average} = \frac{1}{{B}_{N}} {\sum }_{i = 1}^{{B}_{N}} {GS}_{i} .$

Herein, B_{N} denotes a preset batch number, and GSᵢ denotes a magnetization level value corresponding to the i-th defect region.

It will be noted that the preset batch number B_{N} may be preset by the user according to the actual application scenarios, and the embodiments of the present disclosure impose no particular limitation on the implementation manner of the preset batch number B_{N}.

In some embodiments, before the intersection over union threshold for pipeline magnetic flux leakage internal inspection is determined based on the average magnetization level value corresponding to the magnetic flux leakage internal inspection data, the method provided in the embodiments of the present disclosure further includes: determining a peak signal-to-noise ratio corresponding to each set of defect data; and determining, based on the peak signal-to-noise ratio corresponding to each set of defect data, the number of unqualified data in sets of defect data.

Formulas for determining a peak signal-to-noise ratio *PSNRᵢ* of the i-th set of defect data are: ${PSNR}_{i} = 10 \times \left(\frac{{\left({x}_{max}-\overline{x}\right)}^{2}}{MSE}\right) ;$ $MSE = \frac{1}{n} {{\sum }_{i = 1}^{n} \left({x}_{i}-\overline{x}\right)}^{2} .$

Herein, xᵢ denotes a magnetic flux leakage amplitude corresponding to the i-th sampling point acquired by the target sensor acquiring the i-th set of defect data; xₘₐₓ denotes the maximum value among magnetic flux leakage amplitudes corresponding to n sampling points acquired by the target sensor for the i-th set of defect data, and x̅ denotes an average value among the magnetic flux leakage amplitudes corresponding to the n sampling points acquired by the target sensor for the i-th set of defect data. A peak-to-valley difference of the target sensor acquiring the i-th set of defect data is the maximum value among peak-to-valley differences of a plurality of sensors acquiring the i-th set of defect data, and the peak-to-valley difference is a difference between the maximum and minimum values among the magnetic flux leakage amplitudes corresponding to the n sampling points.

For example, with reference to Table 2, a peak-to-valley difference corresponding to Sensor 1 is 20, a peak-to-valley difference corresponding to Sensor 2 is 10, and a peak-to-valley difference corresponding to Sensor 3 is 30. Therefore, Sensor 3 serves as the target sensor. In this way, *x̅* is equal to 60, and *xₘₐₓ* is equal to 70.

In S4, an intersection over union threshold for pipeline magnetic flux leakage internal inspection is determined based on the average magnetization level value corresponding to the magnetic flux leakage internal inspection data.

In an implementation, S4 may include the following:
in response to the average magnetization level value corresponding to the magnetic flux leakage internal inspection data being greater than or equal to a first preset threshold, the intersection over union threshold for pipeline magnetic flux leakage internal inspection is determined to be 0.75;
in response to the average magnetization level value corresponding to the magnetic flux leakage internal inspection data being less than a second preset threshold, the intersection over union threshold for pipeline magnetic flux leakage internal inspection is determined to be 0.5; and
in response to the average magnetization level value corresponding to the magnetic flux leakage internal inspection data being less than the first preset threshold and greater than or equal to the second preset threshold, the intersection over union threshold *IoU* for pipeline magnetic flux leakage internal inspection is determined based on the following formulas: $IoU = 0.1 \times ln \left(\frac{{B}_{N}}{3}\times {GS}_{average}-{B}_{N}\times \left({F}_{max}-{F}_{min}\right)\right) + {P}_{r} ;$ ${P}_{r} = \frac{{N}_{f}}{{N}_{all}} .$

Herein, Fₘₐₓ denotes the first preset threshold, Fₘᵢₙ denotes the second preset threshold, Pᵣ denotes a proportion of unqualified data in sets of defect data, N_{f} denotes the number of unqualified data in the sets of defect data, Nₐₗₗ denotes the total number of the sets of defect data, and the unqualified data refers to a set of defect data with the peak signal-to-noise ratio less than a preset peak signal-to-noise ratio.

In an example, the first preset threshold is equal to 190, the second preset threshold is equal to 140, and the preset peak signal-to-noise ratio is equal to 10 dB.

In some embodiments, the intersection over union threshold may be determined based on a neural network model. For example, a lightweight architecture fusing a one-dimensional convolutional neural network and a long short-term memory network is adopted, so as to take both spatial features and temporal dependencies into consideration. The input is the average magnetization level value, and the output is the intersection over union threshold for pipeline magnetic flux leakage internal inspection. Adaptive weighted loss is used for model strategy optimization.

It may be seen from S1 to S4, in the method provided in the embodiments of the present disclosure, magnetic flux leakage internal inspection data are acquired, then defect annotation is performed on the magnetic flux leakage internal inspection data, to obtain a set of defect data corresponding to each of a plurality of defect regions of a target pipeline; an average magnetization level value corresponding to the magnetic flux leakage internal inspection data is determined based on the set of defect data corresponding to each of the plurality of defect regions; and an intersection over union threshold for pipeline magnetic flux leakage internal inspection is determined based on the average magnetization level value corresponding to the magnetic flux leakage internal inspection data. In this way, in the embodiments of the present disclosure, the intersection over union thresholds corresponding to different pipeline magnetic flux leakage internal inspection data may be quickly and accurately determined, thereby effectively improving the detection accuracy and localization capability of the detection model in a case where the detection model is trained with different pipeline magnetic flux leakage internal inspection data.

During the training of the detection model, image preprocessing and data augmentation are equally crucial for the detection algorithm. Image compression, as a common preprocessing method, may effectively remove image redundancy and improve the quality of pipeline magnetic flux leakage internal inspection data, and has advantages such as controllable parameters and simple implementation. However, setting the image compression coefficient based merely on experience cannot guarantee the quality of the image obtained after data compression; meanwhile, uniform normalization processing may cause the loss of important features, thereby affecting the accuracy of the detection algorithm. Therefore, in order to improve image quality, it is necessary to accurately and quickly determine the image compression coefficient for different pipeline magnetic flux leakage internal inspection data, so as to meet the user requirements in different application scenarios.

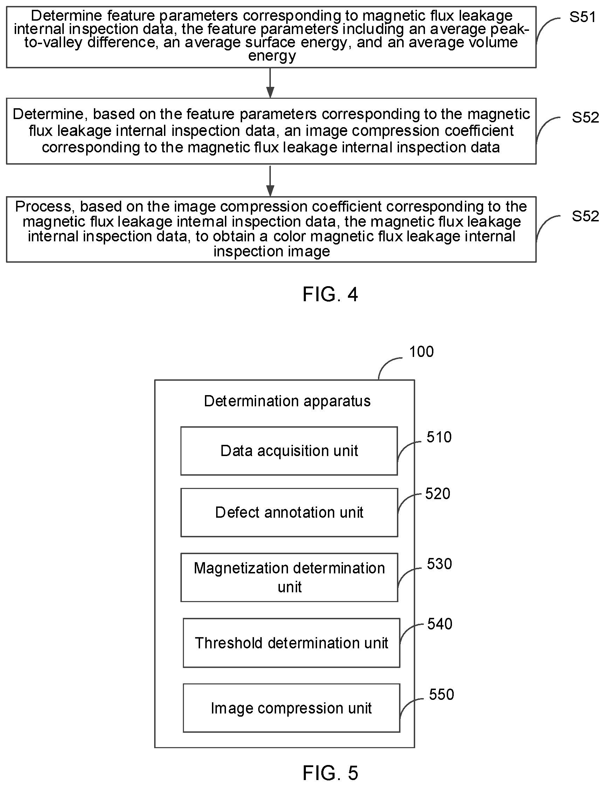

In some embodiments, referring to FIG. 4, the method provided in the embodiments of the present disclosure further includes the following S51 to S53.

In S51, feature parameters corresponding to the magnetic flux leakage internal inspection data are determined. The feature parameters include an average peak-to-valley difference, an average surface energy, and an average volume energy.

In an implementation, S51 may include:
determining a peak-to-valley difference, surface energy, and volume energy corresponding to each set of defect data included in the magnetic flux leakage internal inspection data; and determining a ratio of an average value of the peak-to-valley differences each corresponding to each set of defect data to the maximum value among the peak-to-valley differences each corresponding to each set of defect data as the average peak-to-valley difference, a ratio of an average value of surface energies each corresponding to each set of defect data to the maximum value of surface energies each corresponding to each set of defect data as the average surface energy, and a ratio of an average value of volume energies each corresponding to each set of defect data to the maximum value of volume energies each corresponding to each set of defect data as the average volume energy.

In some embodiments, the peak-to-valley difference corresponding to each set of defect data includes a difference between the maximum and minimum values of the magnetic flux leakage amplitudes of a plurality of sampling points corresponding to the target sensor in each defect region.

A formula for determining the peak-to-valley difference *FG* corresponding to each set of defect data is: $F {X}_{l} G = {max \left({f}_{max}-{f}_{min}\right) .}_{{X}_{r}}$

A formula for determining the surface energy corresponding to each set of defect data is: $S = {\sum }_{{X}_{l}}^{{X}_{r}} \left({F}_{D}-{F}_{rl}\right) .$

Herein, denotes a left valley point of the pipeline defect, denotes a right valley point of the pipeline defect, denotes a magnetic field strength curve of the sensor, and denotes a straight line formed by connecting the left valley point and the right valley point.

In S52, an image compression coefficient corresponding to the magnetic flux leakage internal inspection data is determined based on the feature parameters corresponding to the magnetic flux leakage internal inspection data.

In some embodiments, a formula for determining the image compression coefficient CR corresponding to the magnetic flux leakage internal inspection data is: $CR = {A}_{fg}^{′} \times {K}_{fg} + {A}_{s}^{′} \times {K}_{s} + {A}_{v}^{′} \times {K}_{v} .$

Herein, ${A}_{fg}^{′}$ denotes the average peak-to-valley difference, K_{fg} denotes a weight coefficient of the peak-to-valley difference, ${A}_{s }^{′}$ denotes the average surface energy, Kₛ denotes a weight coefficient of the surface energy, ${A}_{v }^{′}$ denotes the average volume energy, and Kᵥ denotes a weight coefficient of the volume energy.

In an example, a reference value of K_{fg} is equal to 0.7, a reference value of Kₛ is equal to 0.2, and a reference value of Kᵥ is equal to 0.1.

In S53, the magnetic flux leakage internal inspection data are processed based on the image compression coefficient corresponding to the magnetic flux leakage internal inspection data, to obtain a color magnetic flux leakage internal inspection image.

In an implementation, S53 may include:
converting, based on a grayscale mapping method, the magnetic flux leakage internal inspection data into a grayscale image; and processing the grayscale image based on the image compression coefficient corresponding to the magnetic flux leakage internal inspection data, to obtain the color magnetic flux leakage internal inspection image.

In some embodiments, a grayscale mapping method is used to map the data matrix D corresponding to the magnetic flux leakage internal inspection data into the grayscale image, and pixels of the grayscale image are converted into RGB pseudo-color pixels based on a color look-up table (CLUT). All pixels in the grayscale image are traversed in this method, so as to convert the grayscale image into the color magnetic flux leakage internal inspection image. An exemplary conversion method for the color magnetic flux leakage internal inspection image is expressed as: $\left\{\begin{matrix}{C}_{R} = {f}_{R} ⋅ {G}_{gray} = {f}_{R} ⋅ {f}_{D} ⋅ D \\ {C}_{G} = {f}_{G} ⋅ {G}_{gray} = {f}_{G} ⋅ {f}_{D} ⋅ D \\ {C}_{B} = {f}_{B} ⋅ {G}_{gray} = {f}_{B} ⋅ {f}_{D} ⋅ D\end{matrix}\right. .$

Herein, f_{R}, f_{G}, and f_{B} denote conversion coefficients of a red channel, a green channel, and a blue channel in the CLUT, respectively; C_{R}, C_{G}, and C_{B} denote a red-channel coefficient matrix, a green-channel coefficient matrix, and a blue-channel coefficient matrix of the converted color magnetic flux leakage internal detection image, respectively; and G_{gray} denotes the grayscale image.

It may be seen from the foregoing description that the method provided in the embodiments of the present disclosure may effectively remove image redundancy and improve the quality of image data by determining the image compression coefficient corresponding to the magnetic flux leakage internal inspection data, and performing compression processing on the magnetic flux leakage internal inspection data based on the image compression coefficient corresponding to the magnetic flux leakage internal inspection data.

The solutions in the embodiments of the present disclosure are mainly described above from the perspective of methods. It may be understood that, in order to achieve the functions described above, the determination apparatus includes at least one of the corresponding hardware structures or the corresponding software modules for performing a variety of functions. Those skilled in the art will easily realize that the present disclosure may be implemented in the form of hardware or a combination of hardware and computer software, with reference to the units and the algorithm steps of the various examples described in the embodiments disclosed herein. Whether a function is performed by hardware or computer software-driven hardware depends on the specific applications and design constraints of the technical solutions. Professional technicians may use different methods to implement the described functions for each specific application, but such implementation will not be considered beyond the scope of the embodiments of the present disclosure.

In the embodiments of the present disclosure, the determination apparatus may be divided into functional units according to the method embodiments described above. For example, the determination apparatus may be divided into each functional unit corresponding to each function, or two or more functions may be integrated into one processing unit. The integrated units described above may be implemented in the form of hardware or software. It will be noted that the division of modules in the embodiments of the present disclosure is schematic, and is merely a kind of logical function division, and there may be other division manners in actual implementation.

For example, FIG. 5 is a schematic diagram showing a structure of a determination apparatus provided in the embodiments of the present disclosure. The determination apparatus 100 includes: a data acquisition unit 510 configured to acquire magnetic flux leakage internal inspection data, where the magnetic flux leakage internal inspection data include magnetic flux leakage amplitudes acquired by a plurality of sensors at a plurality of sampling points of a target pipeline; a defect annotation unit 520 configured to perform defect annotation on the magnetic flux leakage internal inspection data, to obtain a set of defect data corresponding to each of a plurality of defect regions of the target pipeline, where the set of defect data includes magnetic flux leakage amplitudes acquired by the plurality of sensors at a plurality of sampling points included in the defect region; a magnetization determination unit 530 configured to determine, based on the set of defect data corresponding to each of the plurality of defect regions, an average magnetization level value corresponding to the magnetic flux leakage internal inspection data; and a threshold determination unit 540 configured to determine, based on the average magnetization level value corresponding to the magnetic flux leakage internal inspection data, an intersection over union threshold for pipeline magnetic flux leakage internal inspection.

In some embodiments, the magnetization determination unit 530 may be configured to: determine, based on the set of defect data corresponding to each of the plurality of defect regions, a magnetization level value corresponding to each defect region; and determine, based on the magnetization level value corresponding to each defect region, the average magnetization level value corresponding to the magnetic flux leakage internal inspection data.

A formula for determining the magnetization level value *GS* corresponding to each defect region is: $GS = \frac{1}{m \times n} {\sum }_{i = 1}^{n} mid \left({x}_{i}\right) .$

Herein, m denotes the number of sampling points included in each defect region, n denotes the number of corresponding sensors acquiring each set of defect data, *mid*(*xᵢ*) denotes the median of the magnetic flux leakage amplitudes acquired by the i-th sensor at the *m* sampling points, and i is less than or equal to *n.*

A formula for determining the average magnetization level value *GS_{average}* corresponding to the magnetic flux leakage internal inspection data is: ${GS}_{average} = \frac{1}{{B}_{N}} {\sum }_{i = 1}^{{B}_{N}} {GS}_{i} .$

Herein, B_{N} denotes a preset batch number, and denotes a magnetization level value corresponding to the i-th defect region.

In some embodiments, the threshold determination unit 540 may be configured to: determine, in response to the average magnetization level value corresponding to the magnetic flux leakage internal inspection data being greater than or equal to a first preset threshold, the intersection over union threshold for pipeline magnetic flux leakage internal inspection to be 0.75; determine, in response to the average magnetization level value corresponding to the magnetic flux leakage internal inspection data being less than a second preset threshold, the intersection over union threshold for pipeline magnetic flux leakage internal inspection to be 0.5; and determine, in response to the average magnetization level value corresponding to the magnetic flux leakage internal inspection data being less than the first preset threshold and greater than or equal to the second preset threshold, the intersection over union threshold *IoU* for pipeline magnetic flux leakage internal inspection based on the following formulas: $IoU = 0.1 \times ln \left(\frac{{B}_{N}}{3}\times {GS}_{average}-{B}_{N}\times \left({F}_{max}-{F}_{min}\right)\right) + {P}_{r} ;$ ${P}_{r} = \frac{{N}_{f}}{{N}_{all}} .$

Herein, Fₘₐₓ denotes the first preset threshold, Fₘᵢₙ denotes the second preset threshold, Pᵣ denotes a proportion of unqualified data in sets of defect data, N_{f} denotes the number of unqualified data in the sets of defect data, Nₐₗₗ denotes the total number of the sets of defect data, and the unqualified data refers to a set of defect data with a peak signal-to-noise ratio less than a preset peak signal-to-noise ratio.

In some embodiments, the magnetization determination unit 530 is further configured to: determine a peak signal-to-noise ratio corresponding to each set of defect data; and determine, based on the peak signal-to-noise ratio corresponding to each set of defect data, the number of unqualified data in the sets of defect data.

Formulas for determining a peak signal-to-noise ratio *PSNRᵢ* of the i-th set of defect data are: ${PSNR}_{i} = 10 \times \left(\frac{{\left({x}_{max}-\overline{x}\right)}^{2}}{MSE}\right) ;$ $MSE = \frac{1}{n} {{\sum }_{i = 1}^{n} \left({x}_{i}-\overline{x}\right)}^{2} .$

Herein, xᵢ denotes a magnetic flux leakage amplitude corresponding to the i-th sampling point acquired by the target sensor acquiring the i-th set of defect data; xₘₐₓ denotes the maximum value among magnetic flux leakage amplitudes corresponding to n sampling points acquired by the target sensor for the i-th set of defect data, and x̅ denotes an average value among the magnetic flux leakage amplitudes corresponding to the n sampling points acquired by the target sensor for the i-th set of defect data. A peak-to-valley difference of the target sensor acquiring the i-th set of defect data is the maximum value among peak-to-valley differences of a plurality of sensors acquiring the i-th set of defect data, and the peak-to-valley difference is a difference between the maximum and minimum values among the magnetic flux leakage amplitudes corresponding to the n sampling points.

In some embodiments, the determination apparatus provided in the embodiments of the present disclosure further includes an image compression unit 550. The image compression unit 550 is configured to: determine feature parameters corresponding to the magnetic flux leakage internal inspection data, where the feature parameters include an average peak-to-valley difference, an average surface energy, and an average volume energy; determine, based on the feature parameters corresponding to the magnetic flux leakage internal inspection data, an image compression coefficient corresponding to the magnetic flux leakage internal inspection data; and process, based on the image compression coefficient corresponding to the magnetic flux leakage internal inspection data, the magnetic flux leakage internal inspection data, to obtain a color magnetic flux leakage internal inspection image.

In some embodiments, the image compression unit 550 may be configured to: determine a peak-to-valley difference, surface energy, and volume energy corresponding to each set of defect data included in the magnetic flux leakage internal inspection data; and determine a ratio of an average value of the peak-to-valley differences each corresponding to each set of defect data to the maximum value among the peak-to-valley differences each corresponding to each set of defect data as the average peak-to-valley difference, a ratio of an average value of surface energies each corresponding to each set of defect data to the maximum value of surface energies each corresponding to each set of defect data as the average surface energy, and a ratio of an average value of volume energies each corresponding to each set of defect data to the maximum value of volume energies each corresponding to each set of defect data as the average volume energy.

In some embodiments, a formula for determining the image compression coefficient CR corresponding to the magnetic flux leakage internal inspection data is: $CR = {A}_{fg}^{′} \times {K}_{fg} + {A}_{s}^{′} \times {K}_{s} + {A}_{v}^{′} \times {K}_{v} .$

Herein, ${A}_{fg}^{′}$ denotes the average peak-to-valley difference, K_{fg} denotes a weight coefficient of the peak-to-valley difference, ${A}_{s }^{′}$ denotes the average surface energy, Kₛ denotes a weight coefficient of the surface energy, ${A}_{v }^{′}$ denotes the average volume energy, and Kᵥ denotes a weight coefficient of the volume energy.

In some embodiments, the image compression unit 550 may be configured to: convert, based on a grayscale mapping method, the magnetic flux leakage internal inspection data into a grayscale image; and process the grayscale image based on the image compression coefficient corresponding to the magnetic flux leakage internal inspection data, to obtain the color magnetic flux leakage internal inspection image.

It will be understood that for the description of the embodiments described above, reference may be made to the foregoing method embodiments, and details will not be repeated herein. In addition, for the explanation of any determination apparatus 100 provided above and the description of its beneficial effects, reference may be made to the description in the corresponding method embodiments described above, and details will not be repeated herein.

A computer-readable storage medium is further provided in the embodiments of the present disclosure. The computer-readable storage medium stores at least one computer instruction. The at least one computer instruction, upon being loaded and executed by a processor, performs the method according to any one of the embodiments described above. For the explanations of the relevant content of any computer-readable storage medium provided above and the description of its beneficial effects, reference may be made to the corresponding embodiments described above, and details will not be repeated herein.

A chip is further provided in the embodiments of the present disclosure. The chip integrates a control circuit for implementing the functions of the determination apparatus 100 and one or more ports. In some embodiments, for the functions supported by the chip, reference may be made to the foregoing description, and details will not be repeated herein.

A person of ordinary skill in the art will understand that all or some of the steps in the embodiments described above may be implemented by a program instructing relevant hardware, and the program may be stored in a computer-readable storage medium. The storage medium mentioned above may include a read-only memory, a random access memory, and the like. The processing unit or processor may include a central processing unit, a general-purpose processor, a dedicated circuit structure (e.g., application specific integrated circuit (ASIC)), a microprocessor (e.g., digital signal processor (DSP)), a field programmable gate array (FPGA), or other programmable logic devices, transistor logic devices, hardware components, or any combination thereof.

A computer program product including instructions is further provided in the embodiments of the present disclosure. The instructions, upon being run on a computer, enable the computer to perform any one of the methods in the embodiments described above. The computer program product includes one or more computer instructions. When the computer instructions are loaded and executed on the computer, all or some of the processes or functions according to the embodiments of the present disclosure are generated. The computer may include a general-purpose computer, a special-purpose computer, a computer network, or other programmable devices. The computer instructions may be stored in a computer-readable storage medium or transmitted from one computer-readable storage medium to another. For example, the computer instructions may be transmitted from one website, computer, server, or data center to another website, computer, server, or data center in a wired manner (e.g., coaxial cable, optical fiber, digital subscriber line (DSL)) or a wireless manner (e.g., infrared ray, radio wireless, or microwave). The computer-readable storage media may include any available medium that may be accessed by the computer, or a data storage device such as a server or data center integrated with one or more available media. The available media may include magnetic media (e.g., floppy disks, hard disks, magnetic tapes), optical media (e.g., DVDs), or semiconductor media (e.g., SSDs), etc.

It will be noted that the devices for storing computer instructions or computer programs provided in the embodiments of the present disclosure, such as but not limited to the memory, computer-readable storage medium and communication chip described above, are all non-transitory. Those skilled in the art will recognize that, in one or more of the examples described above, the functions described in the embodiments of the present disclosure may be implemented by hardware, software, firmware, or any combination thereof. When implemented by software, these functions may be stored in the computer-readable storage medium or transmitted as one or more instructions or code on the computer-readable storage medium. The computer-readable storage media include computer storage media and communication media. The communication media include any medium that facilitates transmission of the computer programs from one place to another. The storage medium may include any available medium that may be accessed by a general-purpose or special-purpose computer.

Although the embodiments of the present disclosure have been shown and described above, it may be understood that the embodiments described above are exemplary and will not be construed as limitations on the present disclosure. A person of ordinary skill in the art may make variations, modifications, substitutions and alterations to the embodiments described above within the scope of the present disclosure.

## Claims

1. A method for determining an intersection over union threshold for pipeline magnetic flux leakage internal inspection, comprising:
acquiring magnetic flux leakage internal inspection data, wherein the magnetic flux leakage internal inspection data include magnetic flux leakage amplitudes acquired by a plurality of sensors at a plurality of sampling points of a target pipeline;
performing defect annotation on the magnetic flux leakage internal inspection data, to obtain a set of defect data corresponding to each of a plurality of defect regions of the target pipeline, wherein the set of defect data includes magnetic flux leakage amplitudes acquired by the plurality of sensors at a plurality of sampling points included in the defect region;
determining, based on the set of defect data corresponding to each of the plurality of defect regions, an average magnetization level value corresponding to the magnetic flux leakage internal inspection data; and
determining, based on the average magnetization level value corresponding to the magnetic flux leakage internal inspection data, an intersection over union threshold for pipeline magnetic flux leakage internal inspection.

2. The method according to claim 1, wherein the determining, based on the set of defect data corresponding to each of the plurality of defect regions, the average magnetization level value corresponding to the magnetic flux leakage internal inspection data, includes:
determining, based on the set of defect data corresponding to each of the plurality of defect regions, a magnetization level value corresponding to the each defect region; and
determining, based on the magnetization level value corresponding to the each defect region, the average magnetization level value corresponding to the magnetic flux leakage internal inspection data;
wherein a formula for determining the magnetization level value *GS* corresponding to the each defect region is: $GS = \frac{1}{m \times n} {\sum }_{i = 1}^{n} mid \left({x}_{i}\right) ;$
wherein *m* denotes a number of sampling points included in the each defect region, *n* denotes a number of corresponding sensors acquiring each set of defect data, *mid*(*xᵢ*) denotes a median of magnetic flux leakage amplitudes acquired by an i-th sensor at m sampling points, and i is less than or equal to *n*;
a formula for determining the average magnetization level value *GS_{average}* corresponding to the magnetic flux leakage internal inspection data is: ${GS}_{average} = \frac{1}{{B}_{N}} {\sum }_{i = 1}^{{B}_{N}} {GS}_{i} ;$
wherein B_{N} denotes a preset batch number, and denotes a magnetization level value corresponding to an i-th defect region.

3. The method according to claim 1 or 2, wherein the determining, based on the average magnetization level value corresponding to the magnetic flux leakage internal inspection data, the intersection over union threshold for pipeline magnetic flux leakage internal inspection, includes:
determining, in response to the average magnetization level value corresponding to the magnetic flux leakage internal inspection data being greater than or equal to a first preset threshold, the intersection over union threshold for pipeline magnetic flux leakage internal inspection to be 0.75;
determining, in response to the average magnetization level value corresponding to the magnetic flux leakage internal inspection data being less than a second preset threshold, the intersection over union threshold for pipeline magnetic flux leakage internal inspection to be 0.5; and
determining, in response to the average magnetization level value corresponding to the magnetic flux leakage internal inspection data being less than the first preset threshold and greater than or equal to the second preset threshold, the intersection over union threshold *IoU* for pipeline magnetic flux leakage internal inspection based on the following formulas: $IoU = 0.1 \times ln \left(\frac{{B}_{N}}{3}\times {GS}_{average}-{B}_{N}\times \left({F}_{max}-{F}_{min}\right)\right) + {P}_{r} ;$ ${P}_{r} = \frac{{N}_{f}}{{N}_{all}} ;$
wherein Fₘₐₓ denotes the first preset threshold, Fₘᵢₙ denotes the second preset threshold, Pᵣ denotes a proportion of unqualified data in sets of defect data, N_{f} denotes a number of unqualified data in the sets of defect data, Nₐₗₗ denotes a total number of the sets of defect data, and the unqualified data refers to a set of defect data with a peak signal-to-noise ratio less than a preset peak signal-to-noise ratio.

4. The method according to any one of claims 1 to 3, wherein before the intersection over union threshold for pipeline magnetic flux leakage internal inspection is determined based on the average magnetization level value corresponding to the magnetic flux leakage internal inspection data, the method further comprises:
determining a peak signal-to-noise ratio corresponding to each set of defect data; and
determining, based on the peak signal-to-noise ratio corresponding to the each set of defect data, a number of unqualified data in sets of defect data;
wherein formulas for determining a peak signal-to-noise ratio *PSNRᵢ* of an i-th set of defect data are: ${PSNR}_{i} = 10 \times \left(\frac{{\left({x}_{max}-\overline{x}\right)}^{2}}{MSE}\right) ;$ $MSE = \frac{1}{n} {{\sum }_{i = 1}^{n} \left({x}_{i}-\overline{x}\right)}^{2} ;$
wherein xᵢ denotes a magnetic flux leakage amplitude corresponding to an i-th sampling point acquired by a target sensor acquiring the i-th set of defect data; xₘₐₓ denotes a maximum value among magnetic flux leakage amplitudes corresponding to n sampling points acquired by the target sensor for the i-th set of defect data, and x̅ denotes an average value among the magnetic flux leakage amplitudes corresponding to the n sampling points acquired by the target sensor for the i-th set of defect data; a peak-to-valley difference of the target sensor acquiring the i-th set of defect data is a maximum value among peak-to-valley differences of the plurality of sensors acquiring the i-th set of defect data, and the peak-to-valley difference is a difference between maximum and minimum values among magnetic flux leakage amplitudes corresponding to the n sampling points.

5. The method according to any one of claims 1 to 4, further comprising:
determining feature parameters corresponding to the magnetic flux leakage internal inspection data, wherein the feature parameters include an average peak-to-valley difference, an average surface energy, and an average volume energy;
determining, based on the feature parameters corresponding to the magnetic flux leakage internal inspection data, an image compression coefficient corresponding to the magnetic flux leakage internal inspection data; and
processing, based on the image compression coefficient corresponding to the magnetic flux leakage internal inspection data, the magnetic flux leakage internal inspection data, to obtain a color magnetic flux leakage internal inspection image.

6. The method according to claim 5, wherein the determining the feature parameters corresponding to the magnetic flux leakage internal inspection data, includes:
determining a peak-to-valley difference, surface energy, and volume energy corresponding to each set of defect data included in the magnetic flux leakage internal inspection data; and
determining a ratio of an average value of peak-to-valley differences each corresponding to the each set of defect data to a maximum value among the peak-to-valley differences each corresponding to the each set of defect data as the average peak-to-valley difference, a ratio of an average value of surface energies each corresponding to the each set of defect data to a maximum value of the surface energies each corresponding to the each set of defect data as the average surface energy, and a ratio of an average value of volume energies each corresponding to the each set of defect data to a maximum value of the volume energies each corresponding to the each set of defect data as the average volume energy.

7. The method according to claim 5 or 6, wherein a formula for determining the image compression coefficient CR corresponding to the magnetic flux leakage internal inspection data is: $CR = {A}_{fg}^{′} \times {K}_{fg} + {A}_{s}^{′} \times {K}_{s} + {A}_{v}^{′} \times {K}_{v} ;$ wherein ${A}_{fg}^{′}$ denotes the average peak-to-valley difference, K_{fg} denotes a weight coefficient of the peak-to-valley difference, ${A}_{s }^{′}$ denotes the average surface energy, Kₛ denotes a weight coefficient of the surface energy, ${A}_{v }^{′}$ denotes the average volume energy, and Kᵥ denotes a weight coefficient of the volume energy.

8. The method according to any one of claims 5 to 7, wherein the processing, based on the image compression coefficient corresponding to the magnetic flux leakage internal inspection data, the magnetic flux leakage internal inspection data, to obtain the color magnetic flux leakage internal inspection image, includes:
converting, based on a grayscale mapping method, the magnetic flux leakage internal inspection data into a grayscale image; and
processing the grayscale image based on the image compression coefficient corresponding to the magnetic flux leakage internal inspection data, to obtain the color magnetic flux leakage internal inspection image.

9. An apparatus for determining an intersection over union threshold for pipeline magnetic flux leakage internal inspection, comprising:
a data acquisition unit, configured to acquire magnetic flux leakage internal inspection data, wherein the magnetic flux leakage internal inspection data include magnetic flux leakage amplitudes acquired by a plurality of sensors at a plurality of sampling points of a target pipeline;
a defect annotation unit, configured to perform defect annotation on the magnetic flux leakage internal inspection data, to obtain a set of defect data corresponding to each of a plurality of defect regions of the target pipeline, wherein the set of defect data includes magnetic flux leakage amplitudes acquired by the plurality of sensors at a plurality of sampling points included in the defect region;
a magnetization determination unit, configured to determine, based on the set of defect data corresponding to each of the plurality of defect regions, an average magnetization level value corresponding to the magnetic flux leakage internal inspection data; and
a threshold determination unit, configured to determine, based on the average magnetization level value corresponding to the magnetic flux leakage internal inspection data, an intersection over union threshold for pipeline magnetic flux leakage internal inspection.

10. An electronic device, comprising:
a processor; and a memory configured to store instructions executable by the processor;
wherein the processor is configured to execute the instructions to perform the method for determining the intersection over union threshold for pipeline magnetic flux leakage internal inspection according to any one of claims 1 to 8.

11. A computer-readable storage medium, comprising a computer program or instructions, wherein the computer program or instructions, upon being run on a computer, enable the computer to perform the method according to any one of claims 1 to 8.

12. A computer program product, comprising computer instructions, wherein the computer instructions, upon being executed by a processor, perform the method according to any one of claims 1 to 8.

13. A computer program, comprising computer instructions, wherein the computer instructions, upon being executed by a processor, perform the method according to any one of claims 1 to 8.
